# EUROPEAN PATENT SPECIFICATION

(11) **EP 2 102 519 B1**
(45) Date of publication and mention of the grant of the patent: **28.04.2010**
(21) Application number: 06842799.6
(22) Date of filing: 21.12.2006
(51) Int. Cl.: F16D 3/72

(54) **FLEXIBLE COUPLING**
FLEXIBLE KUPPLUNG
MÉCANISME DE COUPLAGE FLEXIBLE

(43) Date of publication of application: 23.09.2009
(73) Proprietor: SIT S.P.A., 20090 Cusago (MI) (IT)
(72) Inventor: SCAGLIA, Riccardo, 20123 Milano (IT)
(74) Representative: Valentini, Giuliano
(86) International application number: PCT/IT2006/000867
(87) International publication number: WO 2008/075391

(56) References cited:
- WO-A-99/47827
- US-A- 4 710 050
- RIMPEL A ET AL: "TORSIONSSTEIFE METALLBALGKUPPLUNGEN" ANTRIEBSTECHNIK, VEREINIGTE FACHVERLAGE, MAINZ, DE, vol. 31, no. 2, 1 February 1992 (1992-02-01), page 42,44,46,48, XP000250077 ISSN: 0722-8546

## Description

### Technical Field of the Invention

The present invention relates in general to a coupling for transmitting motion between two rotating shafts and, in particular, a coupling provided with a flexible and/or elastically deformable element.

### Technical Background of the Invention

These types of couplings are used to connect two shafts, such as a drive shaft and a driven shaft, in order to allow motion to be transmitted, simultaneously allowing small constant or variable relative movements. In other words, couplings of this type are used to couple rotating shafts with axes that are not perfectly aligned, such as shafts that do not have perfect angular, axial or radial alignment. The possibility of producing this relative movement is entrusted to the presence of a flexible element, such as a flexible element produced in bellows form or a component with helical bands having one or more starts (see for example, the "Single Beam", "Multi Beam" and "Step Beam" coupling models manufactured by the company Huco Dynatork, USA). The flexible element can be made of a metal material, or also in the form of an element made of elastomers, if necessary reinforced.

At the ends thereof, the flexible element is connected integral with a pair of hubs designed to be mounted on respective shafts. The hubs can, for example, have an axial central bore and a clamp type retaining system, or can have an external shank, if necessary provided with an expansion system, for fastening to bored shafts or rotating components.

In the case of flexible elements made of metal material, such as steel or the like, the connection between hubs and elastic element is, for example, implemented by wire welding, inert gas arc welding (such as TIG or MIG), bonding or other similar processes capable of guaranteeing the necessary resistance to torsional stresses.

One of the main problems in the construction of these types of coupling is given by the fact that the shafts to be connected can be of different type and/or diameter. As manufacturers generally keep in stock couplings prepared in advance with identical standard type hubs, special couplings for connecting shafts of different form and/or dimensions must be made to order.

For example, in the case in which the coupling must be provided with hubs having bores of different diameter, it is difficult, if not impossible, to modify the diameter of the bore of one of the two hubs in a complete coupling as, besides the difficulty of clamping the complete coupling during the operation to enlarge one, or both, of the bores of the two hubs, the vibrations transmitted during this operation can jeopardize the integrity of the flexible element and/or of the welds between hubs and elastic element.

Moreover, preparing a special coupling to order requires in any case longer times and higher processing costs than mass production, and which are in any case unacceptable if consistent quantities of these particular couplings are requested.

In the case of couplings with bored hubs, known art provides, for example, for the use of adaptor rings between the bore of the hub and the shaft onto which one of the two hubs is to be keyed. This solution is nonetheless somewhat unreliable and can be impractical in the case in which high torsional stresses must be transmitted. Moreover, the possible formation of fretting corrosion between the various surfaces in mutual contact, could lead to undesirable seizing of the adaptor to the shaft and/or to the hub, thereby jeopardizing the possibility of disassembling the coupling without damaging the shafts and/or the coupling.

International Patent Application n. WO 99/47827 proposes fastening the metal bellows element directly to the shafts to be connected and holding it in position by means of a pair of clamp retaining elements. Nonetheless, to connect shafts with different diameters, it would be necessary to have a considerable variety of flexible elements, with different end diameters, suitable to satisfy many different needs.

Moreover, also in this case damages can be caused to the shafts in the event of fretting corrosion in the coupling between the surfaces of the bellows and of the shaft.

### Summary of the Invention

The object of the present invention is to provide a particularly versatile flexible coupling that can adapt to a wide variety of needs to connect shafts of different shape and dimensions.

A further object of the present invention is to provide a particularly reliable flexible coupling capable of withstanding even high torsional stresses.

Yet another object of the present invention is to propose a flexible coupling that allows production and assembly times and costs to be limited not only in the case of standard couplings, but also in the case of special couplings.

A further object of the present invention is to provide a flexible coupling that can be easily assembled and disassembled without damaging the connected shafts.

These objects are achieved by the present invention, which relates to a coupling for transmitting motion between two rotating shafts, including at least one pair of hubs and at least one flexible element, wherein each of the hubs includes at least one circumferential seat facing towards the flexible element and suitable to receive therewithin an end of the flexible element and retaining means of the flexible element to make the flexible element and the hubs rotate integrally, wherein the retaining means include one or more cam surfaces suitable to receive in abutment corresponding opposed cam surfaces of screw clamping means.

In practice, the drive coupling according to the present invention is composed essentially of three separate elements, i.e. the two hubs and the elastic element, which are assembled together to form the coupling as a whole.

The circumferential seats have the same form and dimensions in both hubs, as well as the annular elements and the ends of the flexible element have the same form and dimensions.

It is thus possible to produce identical hubs and flexible elements for all types of coupling having common dimensional and mechanical properties, which differ only in the diameter of the axial bore for keying onto a shaft and/or for the type of connection to each of the two shafts.

It is thus particularly simple to produce a drive coupling, not only in the case in which the coupling must connect shafts of the same diameter, but also and above all in the case in which the coupling must connect shafts of different diameter or type.

The number of parts that require to be kept in stock to satisfy all possible demands from customers is rationalized. Moreover, the coupling can be easily assembled directly on the installation site, also allowing purchasers to keep a limited number of spare parts adaptable to all types of coupling installed in their plant.

In a first embodiment, the screw clamping means include a plurality of screws, for example grub screws, engaged in corresponding threaded bores that intersect the circumferential seat of each of the hubs.

The bores can, for example be bores with radial axes and the screws each have a conical or truncated-conical free end as opposed cam surface acting on the cam surfaces belonging to the retaining means.

In an alternative embodiment, the bores can have an axis inclined with respect to the axis of the coupling and the screws each have a flat free end as opposed cam surface acting on the cam surfaces belonging to the retaining means.

In another embodiment, each of the hubs includes at least one cylindrical portion with threaded outer side surface facing towards the flexible element. The screw clamping means include in this case at least one .ring nut having a threaded inner surface portion and at least one end having one or more opposing cam surfaces acting on the cam surfaces belonging to the retaining means.

In all the embodiments of the present invention, the screw clamping means are easy to assemble and ensure correct balancing of the coupling.

The circumferential seat is preferably formed by a groove delimited by a pair of side walls extending in an axial direction and by a bottom wall extending in a radial direction.

Each flexible element has ends which include at least one cylindrical portion extending in an axial direction and, at the free end, at least one flange extending in a radial direction.

The one or more cam surfaces of the retaining means are arranged in turn on an annular element suitable to be inserted in the circumferential seat. The annular element includes in turn at least one wall suitable to abut against the axial cylindrical portion and at least another wall suitable to abut against the radial flange of each of the ends of the flexible element.

In this way a firm, although releasable, connection is obtained between hubs and elastic element. Besides not requiring welding operations, this type of retention also facilitates operations to assemble and disassemble the drive coupling without causing damage to the shafts it connects.

### Brief Description of the Drawings

These and other advantages will be more apparent from the description below, provided by way of a non-limiting illustration with reference to the accompanying drawings, wherein:
- Figure 1 is a perspective exploded view of a drive coupling according to a possible embodiment of the present invention;
- Figure 2 is a view prevalently in longitudinal section according to an axial plane of the drive coupling according to another embodiment of the present invention;
- Figure 3 is an enlarged and more detailed view of a detail of Figure 2;
- Figure 4 is an enlarged sectional view illustrating another embodiment of the constraining system between hub and flexible element; and
- Figure 5 is an enlarged sectional view illustrating a further embodiment of the constraining system between hub and flexible element.

### Modes for Carrying Out the Invention

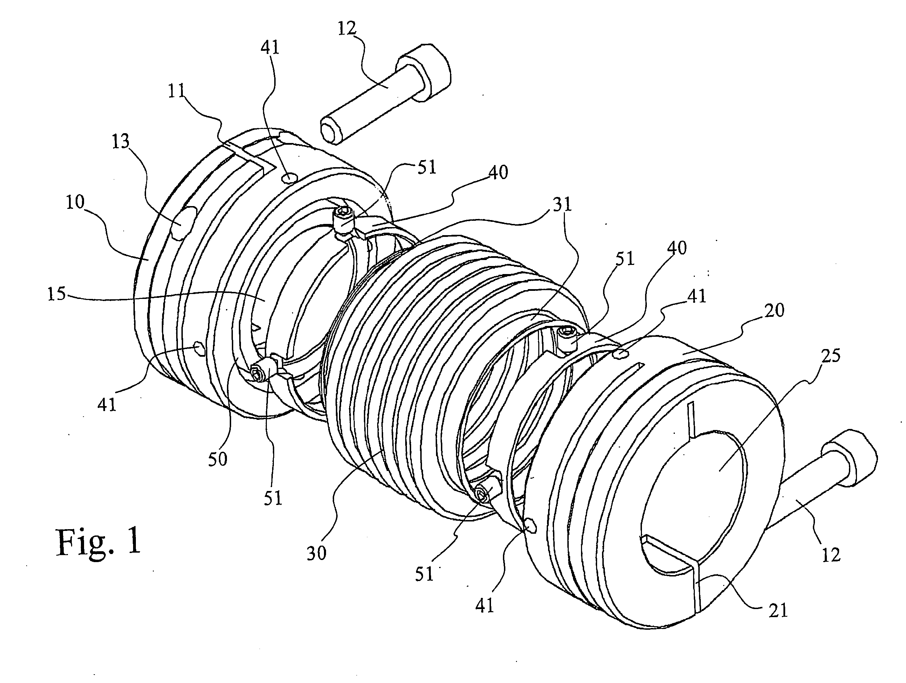

With initial reference to Figure 1, a drive coupling according to a first embodiment of the present invention includes a pair of bored hubs 10 and 20 with clamp type assembly, i.e. hubs provided with slots 11 and 21 that allow them to be keyed onto the respective shafts (not shown) acting on clamping screws 12 inserted in suitable threaded bores 13. In the embodiment represented here by way of example, the hubs 10 and 20 are provided with respective axial central bores 15 and 25 having the same diameter.

A flexible element 30, such as a bellows element made of metal, is fastened to the hubs by means of annular elements 40 which are inserted in circumferential seats 50 together with the end portions 31 of the flexible element. Each annular element 40 is held in position inside the circumferential seat, together with the respective end 31 of the flexible element, by a plurality of headless (or grub) screws 51 inserted in suitable threaded bores 41 produced with radial axis inside each hub 10 and 20.

Preferably, the threaded bores 41 are angularly equidistant from one another. For example, in the embodiment represented here, each hub is provided with four bores 41, diametrically opposite in pairs, along two mutually perpendicular axes.

The circumferential seats 50 have the same form and dimensions on both hubs 10 and 20, as well as the annular elements 40 and the ends 31 of the flexible element have the same form and dimensions.

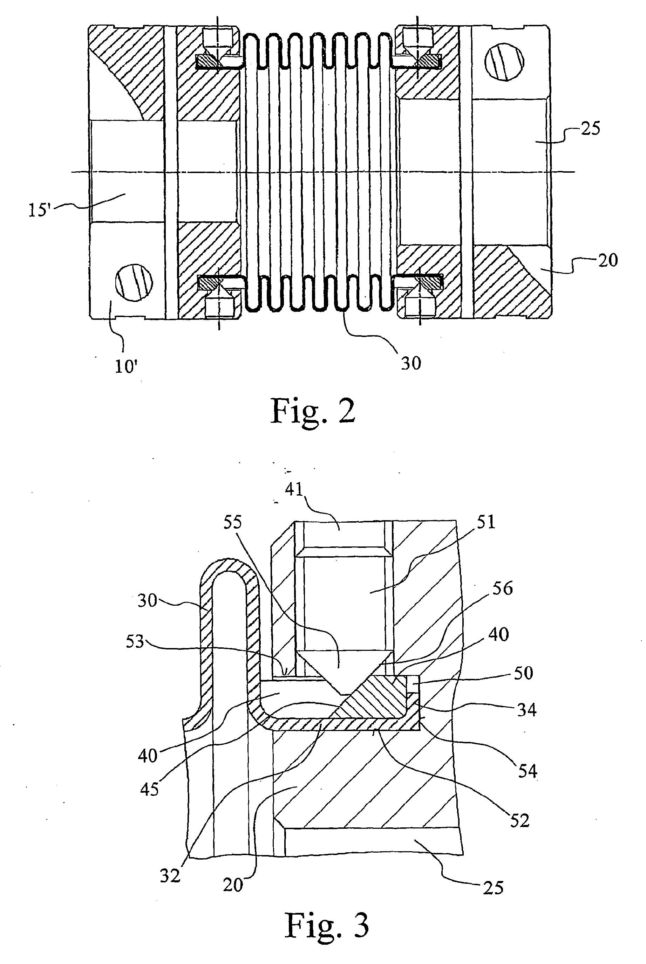

Figure 2 represents in a sectional view another embodiment of a drive coupling according to the present invention, wherein the hub 10' has an axial central bore 15' with smaller diameter with respect to the axial central bore 25 of the hub 20. All the other characteristics already described for the embodiment illustrated in Figure 1 remain the same.

The enlarged view in Figure 3 illustrates a detail of the constraint between the hub 25 of Figures 1 and 2 and the bellows 30 at one of the cramping screws 51. It is evident that the same characteristics and considerations hereunder are also valid for the constraint at all the other clamping screws 51 and regardless of the hub 10, 10' or 20.

The circumferential seat 50 is formed by a groove delimited by a pair of side walls 52 and 53 extending in an axial direction, and by a bottom wall 54 extending in a radial direction.

The bellows 30 has an end portion 31 which is housed in the circumferential seat 50 and includes at least one cylindrical portion 32 extending in an axial direction, and a free end portion which includes a flange 34 extending in a radial direction. The annular element 40 in turn includes at least one wall that abuts against the axial cylindrical portion 32 and at least another wall that abuts against the radial flange 34 of the flexible element 30.

The annular element 40 also includes a plurality of cam surfaces 45 (in this case four cam surfaces) which are positioned during assembly at the bores 41 produced in each hub. The cam surfaces 45 receive in abutment the free ends 55 of the clamping screws 51. The free ends 55 of the clamping screws have a conical or truncated-conical form, with a surface 56 that abuts against the cam surface 45 thereby acting as an opposed cam surface.

Inclination of the cam surfaces 45 and of the opposed cam surfaces 56 can be selected to exert pre-established pressures both in an axial and in a radial direction as a function of the various applications for which the coupling is intended.

In this way, by tightening the clamping screws 51, the pressure exerted by the ends 55 on the cam surfaces 45 of the annular element 40 is transmitted both in a radial direction and in an axial direction. The walls of the annular element 40 in contact with each end 31 of the bellows 30 thus exert a thrust against the axial cylindrical portion 32 and the radial flange 34 thereby fastening the bellows 30 firmly to the hubs 10 (or 10') and 20.

Besides allowing safe and reliable fastening, the constraint between flexible element and hubs can also be released, if required, by unscrewing the clamping screws 51 without causing any damage to the shafts onto which the hubs are keyed.

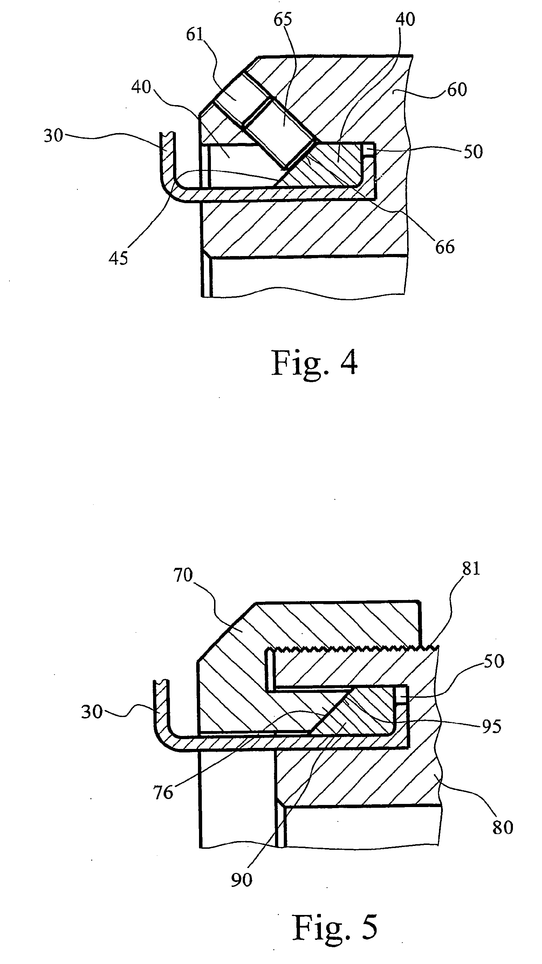

Figure 4 represents a further embodiment of the present invention, in which the hub 60 is provided with a plurality of threaded bores 61 with axis inclined with respect to the axis of the coupling and angularly spaced at the same distance from one another. Engaged in the bores 61 are grub screws 65 having a flat free end 66 that acts as an opposed cam surface on a respective cam surface 45 of the annular element 40. The flexible bellows element 30 is thereby locked by the annular element 40 in the circumferential seat 50.

Inclination of the bores 61 with respect to the axis of the coupling is represented here with an angle of approximately 45°, but it is understood that this inclination can vary as a function of the distribution of forces to be obtained in a radial and axial direction, or as a function of the inclination of the cam surfaces 45, or yet again to facilitate access to the screws 65 during assembly and disassembly of the coupling.

The embodiment illustrated schematically in Figure 5 instead differs from the previous embodiments through the use of a ring nut 70 as screw clamping means. The ring nut 70 has a threaded inner surface which engages over a threaded cylindrical portion 81 of the hub 80, with the threaded portion 81 facing towards the flexible element 30.

The ring nut 70 has an end suitably shaped to form an inclined surface 76 acting, as opposed cam surface, on the cam surface 95 of the annular element 90. The latter is preferably provided with a single cam surface 95 which extends for the entire circumference of the annular element 90.

The representation provided here by way of example in Figure 5 is in any case extremely schematic, and does not take account of the suitable dimensional ratios between the various components to allow assembly of ring nut, annular element and flexible element in the circumferential seat 50.

Various modifications can be made to the embodiments represented herein by way of example without departing from the scope of the present invention. For example, even if the invention has been described with reference to bored hubs, it is evident that the same principles of the present invention could also be applied to couplings in which one or both hubs are not provided with bores, for example hubs provided with shanks and optionally with expansion portions or the like.

The cam surfaces can be produced directly on the ends of the flexible element, for example by integrating the elastic element and the annular elements at the ends thereof in one piece.

Moreover, the solution proposed can also be adopted in the case in which the flexible element is produced in any other form, such as in the form of a helical component with one or more starts, or also made of materials other than metal, such as reinforced elastomers or the like, if necessary provided with end portions made of metal or the like.

## Claims

1. A coupling for transmitting motion between two rotating shafts, including at least one pair of hubs (10, 20) and at least one flexible element (30), wherein each of said hubs includes at least one circumferential seat (50) facing towards said flexible element (30) and suitable to receive therewithin an end of said flexible element (30) and retaining means (40) of said flexible element to make said flexible element and said hubs rotate in one piece, **characterized in that** said retaining means (40) include one or more cam surfaces suitable to receive in abutment corresponding opposed cam surfaces of screw clamping means (51).

2. The coupling as claimed in claim 1, wherein said circumferential seats (50) have the same form and dimensions in both said hubs (10, 20).

3. The coupling as claimed in claim 1, wherein the ends of said flexible element (30) have the same form and dimensions.

4. The coupling as claimed in claim 1, wherein said screw clamping means (51, 65) include a plurality of screws engaged in corresponding threaded holes (41) that intersect said circumferential seat of each of said hubs (10, 20).

5. The coupling as claimed in claim 4, wherein said screws are engaged in radial holes and each have a conical or truncated conical free end as opposed cam surface (56) acting on the cam surfaces of said retaining means.

6. The coupling as claimed in claim 4, wherein said screws (65) are engaged in holes (61) with axis inclined with respect to the axis of the coupling and each have a flat free end as opposed cam surface acting on the cam surfaces belonging to said retaining means.

7. The coupling as claimed in any of claims 4 to 6, wherein said screws (51) are grub screws.

8. The coupling as claimed in clqim 1, wherein each of said hubs includes at least one cylindrical portion (81) with threaded outer side surface facing towards said flexible element, and wherein said screw clamping means include at least one ring nut (70) having a threaded inner surface portion and at least one end having one or more opposing cam surfaces acting on the cam surfaces of said retaining means.

9. The coupling as claimed in claim 1, wherein said circumferential seat is formed by a groove delimited by a pair of side walls (52, 53) extending in an axial direction and by a bottom wall (54) extending in a radial direction.

10. The coupling as claimed in claim 1, wherein said flexible element (30) has ends that include at least one cylindrical portion (32) extending in an axial direction.

11. The coupling as claimed in claim 1, wherein said flexible element (30) has free end portions that include at least one flange (34) extending in a radial direction.

12. The coupling as claimed in claim 1, wherein said one or more cam surfaces of said retaining means are arranged on an annular element (40) suitable to be inserted in said circumferential seat (50).

13. The coupling as claimed in any of claims 9 to 12, wherein said annular element (40) includes at least one wall suitable to abut against said axial cylindrical portion and at least another wall suitable to abut against said radial flange of said ends of the flexible element.

14. The coupling as claimed in claim 1, wherein said one or more cam surfaces of said retaining means are arranged on end portions of said flexible element (30) and are suitable to be inserted in said circumferential seats.

15. The coupling as claimed in claims 9 or 14, wherein said free end portions of said elastic element include (30) at least one axial cylindrical wall suitable to abut against at least one of the side walls of said groove and at least one radial wall suitable to abut against the bottom wall of said groove.

16. The coupling as claimed in claim 1, wherein said flexible element (30) is made of metal.

17. The coupling as claimed in claim 1, wherein said flexible element (30) is produced in the form of a bellows element.

## Patentansprüche

1. Kupplung zur Übertragung von Bewegung zwischen zwei rotierenden Wellen, umfassend wenigstens ein Paar Naben (10,20) und wenigstens ein flexibles Element (30), wobei jede der Naben wenigstens einen umfänglichen Sitz (50) umfasst, der dem flexiblen Element (30) zugewandt ist und geeignet ist, um innerhalb dessen ein Ende des flexiblen Elements (30) und Rückhaltemittel (40) des flexiblen Elements aufzunehmen, um eine Drehung des flexiblen Elements und der Naben in einem Stück zu bewirken, **dadurch gekennzeichnet, dass** die Rückhaltemittel (40) eine oder mehrere Nockenflächen umfassen, welche geeignet sind, um korrespondierende entgegengesetzte Nockenflächen von Schrauben-Klemmmitteln (51) auf Anschlag aufzunehmen.

2. Kupplung nach Anspruch 1, bei welcher die umfänglichen Sitze (50) in beiden Naben (10,20) dieselbe Form und dieselben Abmessungen aufweisen.

3. Kupplung nach Anspruch 1, bei welcher die Enden des flexiblen Elements (30) die gleiche Form und die gleichen Dimensionen aufweisen.

4. Kupplung nach Anspruch 1, bei welcher die Schrauben-Klemmmittel (51,65) eine Vielzahl von Schrauben umfassen, welche sich mit korrespondierenden Gewindebohrungen (41) in Eingriff befinden, welche den umfänglichen Sitz jeder der Naben (10,20) schneiden.

5. Kupplung nach Anspruch 4, bei welcher die Schrauben mit radialen Bohrungen in Eingriff sind und jeweils ein konisches oder abgeflachtes konisches freies Ende als gegenüberliegende Nockenfläche (56) aufweisen, welches auf die Nockenflächen der Rückhaltemittel wirkt.

6. Kupplung nach Anspruch 4, bei welcher die Schrauben (65) so mit den Bohrungen (61) in Eingriff sind, dass die Achse bezogen auf die Achse der Kupplung geneigt verläuft, und jeweils ein flaches freies Ende als gegenüberliegende Nockenfläche aufweisen, welches auf die Nockenflächen der Rückhaltemittel wirkt.

7. Kupplung nach einem der Ansprüche 4 bis 6, bei welcher die Schrauben (51) als Madenschrauben ausgebildet sind.

8. Kupplung nach Anspruch 1, bei welcher jeder der Naben wenigstens einen zylindrischen Teil (81) mit einer mit Gewinde versehenen äußeren Fläche aufwiest, die dem flexiblen Element zugekehrt ist und bei welcher die Schrauben-Klemmmittel wenigstens eine Ringmutter (70) mit einem mit Gewinde versehenen inneren Flächenbereich umfasst und wenigstens ein Ende, ein oder mehrere gegenüberliegende Nockenflächen aufweist, welche auf die Nockenflächen der Rückhaltemittel einwirken.

9. Kupplung nach Anspruch 1, bei welcher der umfängliche Sitz durch eine Nute gebildet wird, die durch ein Paar Seitenwände (52,53), die sich in axialer Richtung erstrecken und eine untere Wand (54), die sich in radialer Richtung erstreckt, begrenzt ist.

10. Kupplung nach Anspruch 1, bei welcher das flexible Element (30) freie Enden aufweist, die wenigstens einen zylindrischen Bereich (32) umfasst, der sich in axiale Richtung erstreckt.

11. Kupplung nach Anspruch 1, bei welcher das flexible Element (30) freie Enden aufweist, die wenigstens einen Flansch (34) umfassen, welcher sich in radiale Richtung erstreckt.

12. Kupplung nach Anspruch 1, bei welcher wenigstens die eine oder mehrere Nockenflächen der Rückhaltemittel auf einem ringförmigen Element (40) angeordnet sind, derart, dass sie in den umfänglichen Sitz (50) einsetzbar sind.

13. Kupplung nach einem der Ansprüche 9 bis 12, bei welcher das ringförmige Element (40) wenigstens eine Wand zur Anlage gegen das axiale zylindrische Teil und wenigstens eine andere Wand zur Anlage gegen den radialen Flansch der Enden des flexiblen Elements umfasst.

14. Kupplung nach Anspruch 1, bei welcher die eine oder mehrere Nockenflächen der Rückhaltemittel an Endbereichen des flexiblen Elements (30) angeordnet sind und in die umfänglichen Sitze einsetzbar sind.

15. Kupplung nach einem der Ansprüche 9 oder 14, bei welcher die freien Enden des elastischen Elements (30) wenigstens eine axiale zylindrische Wand zur Anlage gegen wenigstens eine der Seitenwände der Nute und wenigstens eine radiale Wand zur Anlage gegen die untere Wand der Nute umfassen.

16. Kupplung nach Anspruch 1, bei welcher das flexible Element (30) aus Metall besteht.

17. Kupplung nach Anspruch 1, bei welcher das flexible Element (30) in Form eines Balgelements ausgebildet ist.

## Revendications

1. Couplage pour transmettre le mouvement entre deux arbres rotatifs, comprenant au moins une paire de moyeux (10, 20) et au moins un élément flexible (30), dans lequel chacun desdits moyeux comprend au moins un siège circonférentiel (50) orienté vers ledit élément flexible (30) et approprié pour recevoir à l'intérieur de celui-ci une extrémité dudit élément flexible (30) et des moyens de retenue (40) dudit élément flexible pour faire tourner ledit élément flexible et lesdits moyeux d'un seul tenant, **caractérisé en ce que** lesdits moyens de retenue (40) comprennent une ou plusieurs surfaces de came appropriées pour recevoir en butée des surfaces de came opposées correspondantes des moyens de serrage de vis (51).

2. Couplage selon la revendication 1, dans lequel lesdits sièges circonférentiels (50) ont la même forme et les mêmes dimensions dans les deux desdits moyeux (10, 20).

3. Couplage selon la revendication 1, dans lequel les extrémités dudit élément flexible (30) ont la même forme et les mêmes dimensions.

4. Couplage selon la revendication 1, dans lequel lesdits moyens de serrage de vis (51, 65) comprennent une pluralité de vis mis en prise dans des trous filetés (41) correspondants qui coupent ledit siège circonférentiel de chacun desdits moyeux (10, 20).

5. Couplage selon la revendication 4, dans lequel lesdites vis sont mises en prise dans des trous radiaux et ont chacune une extrémité libre conique ou tronconique en tant que surface de came opposée (56) agissant sur les surfaces de came desdits moyens de retenue.

6. Couplage selon la revendication 4, dans lequel lesdites vis (65) sont mises en prise dans des trous (61) avec un axe incliné par rapport à l'axe du couplage et chacune a une extrémité plate en tant que surface de came opposée agissant sur les surfaces de came appartenant aux moyens de retenue.

7. Couplage selon l'une quelconque des revendications 4 à 6, dans lequel lesdites vis (51) sont des vis sans tête.

8. Couplage selon la revendication 1, dans lequel chacun desdits moyeux comprend au moins une partie cylindrique (81) avec une surface latérale externe filetée orientée vers ledit élément flexible et dans lequel lesdits moyens de serrage de vis comprennent au moins un écrou annulaire (70) ayant une partie de surface interne filetée et au moins une extrémité ayant une ou plusieurs surfaces de came opposées agissant sur les surfaces de came desdits moyens de retenue.

9. Couplage selon la revendication 1, dans lequel ledit siège circonférentiel est formé par une rainure délimitée par une paire de parois latérales (52, 53) s'étendant dans une direction axiale et par une paroi inférieure (54) s'étendant dans une direction radiale.

10. Couplage selon la revendication 1, dans lequel ledit élément flexible (30) a des extrémités qui comprennent au moins une partie cylindrique (32) s'étendant dans une direction axiale.

11. Couplage selon la revendication 1, dans lequel ledit élément flexible (30) a des parties d'extrémité libre qui comprennent au moins un rebord (34) s'étendant dans une direction radiale.

12. Couplage selon la revendication 1, dans lequel lesdites une ou plusieurs surfaces de came desdits moyens de retenue sont agencées sur un élément annulaire (40) approprié pour être inséré dans ledit siège circonférentiel (50).

13. Couplage selon l'une quelconque des revendications 9 à 12, dans lequel ledit élément annulaire (40) comprend au moins une paroi appropriée pour venir en butée contre ladite partie cylindrique axiale et au moins une autre paroi appropriée pour venir en butée contre ledit rebord radial desdites extrémités de l'élément flexible.

14. Couplage selon la revendication 1, dans lequel lesdites une ou plusieurs surfaces de came desdits moyens de retenue sont agencées sur des parties d'extrémité dudit élément flexible (30) et sont appropriées pour être insérées dans lesdits sièges circonférentiels.

15. Couplage selon les revendications 9 ou 14, dans lequel lesdites parties d'extrémité libre dudit élément élastique (30) comprennent au moins une paroi cylindrique axiale appropriée pour venir en butée contre au moins l'une des parois latérales de ladite rainure et au moins une paroi radiale appropriée pour venir en butée contre la paroi inférieure de ladite rainure.

16. Couplage selon la revendication 1, dans lequel ledit élément flexible (30) est réalisé à partir de métal.

17. Couplage selon la revendication 1, dans lequel ledit élément flexible (30) est produit sous la forme d'un élément de soufflet.
